# FASCICULE DE BREVET EUROPEEN

(11) **EP 2 955 050 B1**
(45) Date de publication et mention de la délivrance du brevet: **06.12.2017**
(21) Numéro de dépôt: 15169597.0
(22) Date de dépôt: 28.05.2015
(51) Int. Cl.: B60K 13/04, B62D 21/11, F01N 13/00

(54) **ESSIEU ARRIERE DE VEHICULE AUTOMOBILE MUNI D'UN SILENCIEUX D'ECHAPPEMENT INTEGRE DANS UNE TRAVERSE**
HINTERACHSE EINES KRAFTFAHRZEUGS, DIE MIT EINEM IN EINE QUERACHSE INTEGRIERTEN AUSPUFFTOPF AUSGESTATTET IST
REAR AXLE OF A MOTOR VEHICLE PROVIDED WITH AN EXHAUST SILENCER BUILT INTO A CROSSMEMBER

(30) Priorité: 12.06.2014 FR 1455333
(43) Date de publication de la demande: 16.12.2015
(73) Titulaire: PSA Automobiles SA, 78300 Poissy (FR)
(72) Inventeur: Cohen, Philippe, 91390 MORSANG-SUR-ORGE (FR); Stevens, Olivier, 78760 JOUARS PONTCHARTRAIN (FR); Ienny, Damien, 92130 ISSY LES MOULINEAUX (FR)

(56) Documents cités:
- DE-A1- 3 409 667
- DE-A1-102008 049 288
- JP-A- 2007 145 290
- US-A- 5 702 125

## Description

La présente invention porte sur un essieu arrière de véhicule automobile muni d'un silencieux de ligne d'échappement intégré dans une traverse, ainsi que sur le véhicule automobile correspondant.

De façon connue en soi, le silencieux arrière de la ligne d'échappement est usuellement disposé sous une cuvette de rangement d'une roue de secours, laquelle est située sous le coffre. La forme de la cuvette de la roue de secours est choisie comme étant complémentaire du silencieux sous-jacent. Compte tenu de l'encombrement du silencieux sous le plancher de charge, une telle implantation ne permet toutefois pas d'optimiser l'intégration de l'ensemble des composants de la plateforme du véhicule qui sont de plus en plus nombreux.

Par ailleurs, le document FR2901748 décrit l'intégration d'un silencieux dans un longeron du véhicule. Toutefois, le faible volume intérieur du longeron rend difficile l'intégration du silencieux. En outre, le silencieux est difficilement accessible pour effectuer des opérations de maintenance du fait de la configuration fermée du longeron, ce qui oblige à remplacer l'ensemble en cas de disfonctionnement.

Il est connu du document JP2007 145209, qui décrit un essieu arrière selon le préambule de la revendication 1, une méthode pour monter un système d'échappement et un corps de montage de la carrosserie du véhicule solidairement sur un châssis de véhicule. Il est connu du document US 5 702 125 un sous-châssis disposé au-dessous d'une surface inférieure du panneau de plancher arrière. Une cartouche absorbante de gaz et un silencieux sont juxtaposés dans une direction latérale d'une carrosserie de véhicule dans un espace qui est entouré par une surface arrière d'une traverse médiane fixée sur une surface arrière d'une paroi de liaison. Il est connu du brevet DE 34 09 667 une partie arrière d'un véhicule à moteur avec un plancher plat qui, le cas échéant, se dresse à l'arrière approximativement à partir du centre du véhicule et qui possède un tunnel longitudinal qui possède un système d'échappement qui est formé à partir d'un silencieux. Le document DE 10 2008 049288 décrit un cadre pour un véhicule, qui est équipé d'un moteur monté dans un compartiment moteur et ayant un vilebrequin, qui comprend un cadre auxiliaire qui se prolonge dans la direction latérale d'un espace à l'arrière du moteur. Une partie d'évidement longitudinal est formée sur une surface supérieure du châssis auxiliaire, de sorte que le mécanisme de direction soit disposé en dessous du tuyau d'échappement se prolonge dans la partie d'évidement.

L'invention vise à remédier efficacement à ces inconvénients en proposant un essieu arrière de véhicule automobile selon la revendication 1.

L'invention permet ainsi d'optimiser l'architecture sous-caisse en libérant le volume occupé par le silencieux arrière pour l'implantation de nouvelles fonctions. Le silencieux est également plus accessible, ce qui facilite les opérations de maintenance. L'invention procure également un gain économique substantiel du fait de la réduction de la longueur de la ligne d'échappement dont la sortie d'échappement pourra être située juste après la traverse arrière.

Selon l'invention, ledit corps de ladite traverse arrière est délimité par des parois, et il a une section transversale sensiblement en forme de U.

Selon une réalisation, ladite traverse arrière comporte une première ouverture autorisant un passage d'une entrée de ladite ligne d'échappement, ainsi qu'une deuxième ouverture autorisant le passage d'une sortie de ladite ligne d'échappement.

Selon une réalisation, ladite traverse arrière comporte un système de support et de suspension dudit silencieux.

Selon une réalisation, ledit système de support et de suspension est formé par au moins deux ensembles amortisseurs comportant chacun une cale élastique associée à un premier fil de suspente relié à une face interne de ladite traverse arrière et à un deuxième fil de suspente relié audit silencieux.

Selon une réalisation, il existe un jeu entre des parois de ladite traverse arrière et ledit silencieux autorisant un débattement dudit silencieux.

Selon une réalisation, ladite traverse arrière est équipée d'un écran thermique ou thermo-acoustique. On réduit ainsi les émissions thermiques et/ou les vibrations du silencieux vers l'ensemble du train.

Selon une réalisation, ledit volume creux de ladite traverse arrière est fermé par une plaque assurant une tenue mécanique.

Selon une réalisation, ladite plaque comporte des zones de ventilations constituées par une pluralité d'ouvertures traversantes.

Selon une réalisation, ledit corps de ladite traverse arrière est pourvu de chicanes.

L'invention a également pour objet un véhicule automobile équipé d'un essieu arrière tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective de l'essieu arrière selon la présente invention;
La figure 2 est une vue de dessous de l'essieu arrière selon la présente invention sans la plaque de fermeture de la traverse;
La figure 3 est une vue en coupe longitudinale de l'essieu arrière selon la présente invention;
La figure 4 est une vue de dessus de l'essieu arrière selon la présente invention;
La figure 5 est une vue de dessous de l'essieu arrière selon la présente invention avec la plaque de fermeture de la traverse.

Les éléments identiques, similaires, ou analogues conservent la même référence d'une figure à l'autre.

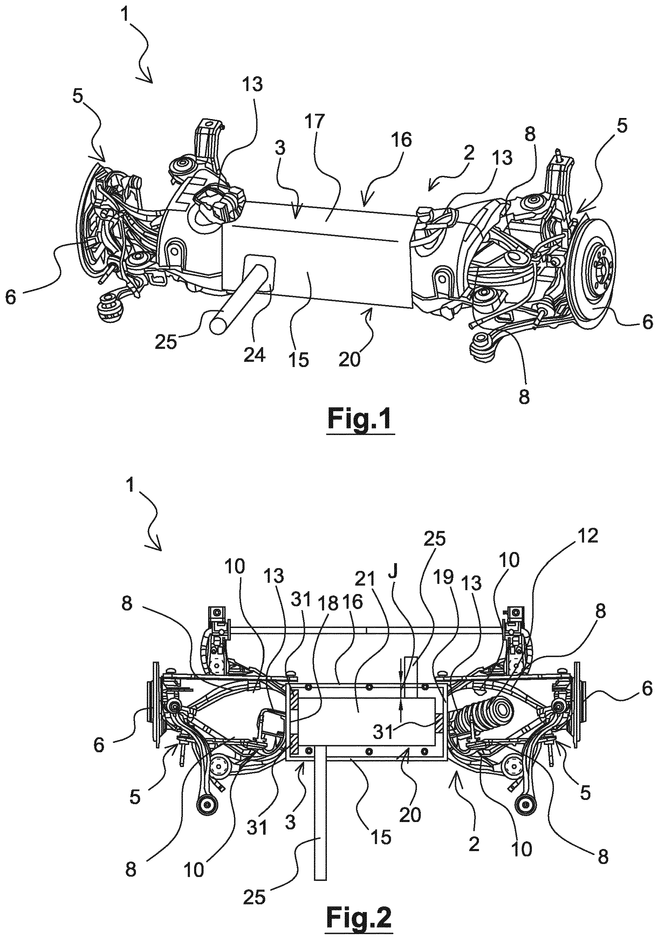

Les figures 1 à 5 montrent un essieu 1 de véhicule automobile comportant une traverse arrière 2 fixée au châssis du véhicule. Cette traverse arrière 2 comprend un corps 3 auquel sont reliés un premier et un deuxième demi-trains 5 portant chacun un moyeu 6 de roue du véhicule.

Comme cela est bien visible sur la figure 2, chaque demi-train 5 est articulé par rapport au corps 3 autour d'un axe sensiblement horizontal. A cet effet, chaque demi-train 5 comporte deux bras 8 pénétrant à l'intérieur du volume interne de la traverse 2 et articulés chacun sur une des parois internes de la traverse 2 via une liaison 10. Une suspension 12 est reliée à chaque demi-train 5 en passant par des ouvertures 13 ménagées dans un fond de la traverse arrière 2. Une telle configuration permet d'accompagner le mouvement des roues arrière susceptibles d'osciller lors du roulage.

Plus précisément, le corps 3 de la traverse 2 comporte deux parois longitudinales 15, 16 en regard l'une de l'autre réunies entre elle par une paroi de liaison 17 correspondant au fond, de manière à présenter une section transversale en forme de U. Le corps 3 comporte en outre deux parois transversales 18, 19 situées chacune à proximité d'une ouverture 13 prévue pour le passage d'une suspension 12.

Le corps 3 délimite ainsi un volume creux 20, de forme sensiblement parallélépipédique, ouvert du côté du sol lorsque le véhicule se trouve en position de roulage. En variante, le volume creux 20 pourra être délimité par des parois longitudinales 15, 16 en forme de V ou toute autre forme.

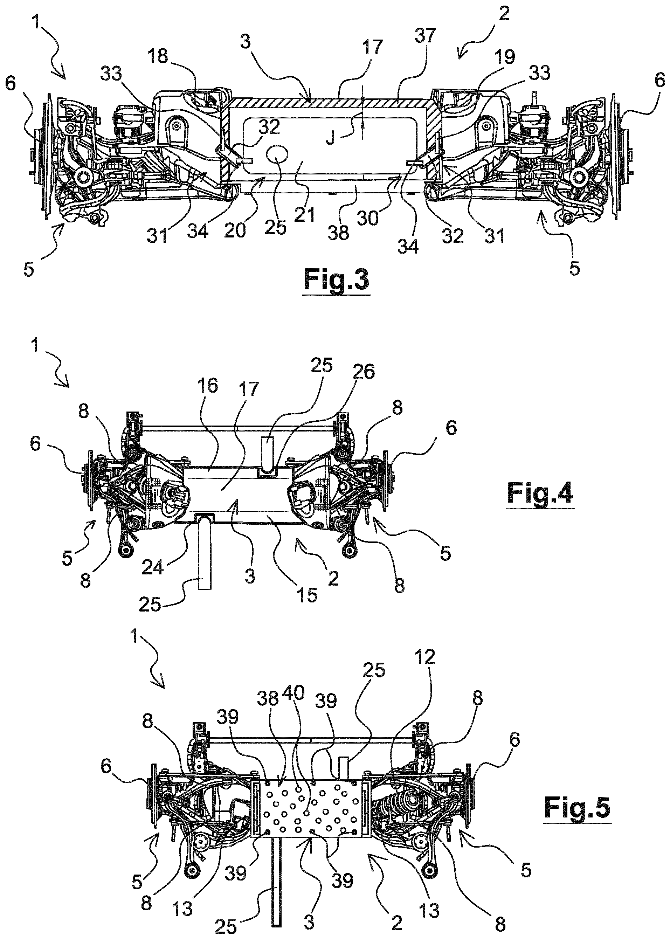

Un silencieux d'échappement référencé 21 permet de diminuer le niveau sonore des gaz d'échappement circulant dans une ligne d'échappement 25 jusqu'à un niveau acceptable avant le refoulement de ces gaz dans l'atmosphère. Comme on peut le voir clairement sur les figures 2 et 3, le silencieux d'échappement 21 est positionné à l'intérieur du volume creux 20.

Comme montré sur la figure 4, la traverse arrière 2 comporte une première ouverture 24 autorisant le passage d'une entrée de la ligne d'échappement 25, ainsi qu'une deuxième ouverture 26 autorisant le passage d'une sortie de la ligne d'échappement 25. La première ouverture 24 est ménagée dans la paroi longitudinale 15, tandis que la deuxième ouverture 26 est ménagée dans la paroi longitudinale 16 située en regard de la paroi 15.

La traverse arrière 2 comporte en outre un système 30 de support et de suspension du silencieux 21 bien visible sur la figure 3. De préférence, le système 30 de support et de suspension est formé par au moins deux ensembles amortisseurs 31 comportant chacun une cale 32 élastique associée à un premier fil de suspente 33 relié à une face interne de la traverse 2 et à un deuxième fil de suspente 34 relié au silencieux 21. En l'occurrence, comme on peut le voir sur la vue de dessous de la figure 2, le système 30 comporte deux ensembles amortisseurs 31 positionnés entre une des parois transversales 18 et une face en regard du silencieux 21; ainsi qu'un troisième ensemble amortisseur 31 positionné entre l'autre paroi transversale 19 et une face en regard du silencieux 21.

On prévoit de préférence un jeu J entre les faces internes de la traverse 2 et le silencieux 21 pour permettre le débattement du silencieux 21, sans que ce dernier puisse entrer en contact avec les parois de la traverse 2.

En outre, la traverse 2 est de préférence équipée d'un écran thermique 37 visible sur la figure 3 afin de réduire les émissions thermiques du silencieux 21 vers l'ensemble de l'essieu 1. L'écran thermique 37 pourra être fixé sur les faces internes des parois 15-19 la traverse 2. L'écran 37 pourra par exemple être réalisé dans un matériau de type aluminium gaufré ou tout autre matériau équivalent. On prévoit également dans ce cas un espace J entre l'écran 37 et le silencieux 21 pour autoriser le débattement de ce dernier. En variante, l'écran 37 pourra être de type thermo-acoustique pour garantir également une réduction des vibrations du silencieux 21 vers la traverse 2.

Le volume creux 20 est fermé dans sa partie inférieure par une plaque 38 visible sur les figures 3 et 5. A cet effet, on prévoit des moyens de fixation 39 de la plaque 38 sur le corps 3. Ces moyens de fixation 39 prennent de préférence la forme de vis enfilées à l'intérieur de trou de la plaque 38 pour coopérer avec des trous taraudés correspondants réalisés dans des oreilles issus des parois 15, 16 de la traverse 2. On facilite ainsi le démontage de la plaque 38 pour accéder au silencieux 21 lors des opérations de service après-vente. Des moyens d'indexage non représentés pourront également être prévus pour garantir un positionnement correct de la plaque 38 par rapport à la traverse 2 lors du montage.

La plaque 38, qui assure une tenue mécanique de l'ensemble, pourra comporter des zones de ventilations 40 permettant l'évacuation de la chaleur vers le sol. Les zones de ventilation 40 sont constituées par une pluralité d'ouvertures traversantes ménagées dans la plaque 38. Le nombre d'ouvertures 40, qui est le plus grand possible pour optimiser l'aération, est limité de manière à garantir une rigidité suffisante de l'ensemble. A cet égard, il est à noter que dans le cas d'une traverse arrière 2 réalisée dans un matériau particulièrement rigide, il serait possible de supprimer la plaque 38 de fermeture.

L'invention permet ainsi d'optimiser l'architecture sous-caisse en libérant le volume précédemment occupé par le silencieux pour l'implantation de nouvelles fonctions. Le silencieux est également plus accessible, ce qui facilite les opérations de maintenance. En outre, l'invention procure un gain économique substantiel du fait de la réduction de la longueur de la ligne d'échappement 25 dont la sortie d'échappement pourra être située juste après la traverse 2. On note également que l'invention présente l'avantage de ne pas modifier la configuration technique de la ligne d'échappement dans la mesure où l'on ne modifie pas son aspect fonctionnel.

En variante, le corps 3 de la traverse 2 est pourvu de chicanes pour réaliser la fonction de silencieux.

## Revendications

1. Essieu arrière (1) de véhicule automobile comportant une traverse arrière (2) munie d'un corps (3) auquel sont reliés un premier et un deuxième demi-trains (5) ainsi qu'un silencieux (21) visant à limiter un niveau sonore de gaz d'échappement circulant dans une ligne d'échappement (25), **caractérisé en ce que** ledit silencieux (21) est positionné à l'intérieur d'un volume creux (20) délimité par ledit corps (3) de ladite traverse arrière (2), **en ce que** le corps (3) de ladite traverse arrière (2) est délimité par des parois (15, 16, 17), et **en ce que** ledit corps (3) présente une section transversale sensiblement en forme de U.

2. Essieu selon la revendication 1, **caractérisé en ce que** ladite traverse arrière (2) comporte une première ouverture (24) autorisant un passage d'une entrée de ladite ligne d'échappement (25), ainsi qu'une deuxième ouverture (26) autorisant le passage d'une sortie de ladite ligne d'échappement (25).

3. Essieu selon l'une quelconque des revendications précédentes, **caractérisé en ce que** ladite traverse arrière (2) comporte un système (30) de support et de suspension dudit silencieux (21).

4. Essieu selon la revendication précédente, **caractérisé en ce que** le système (30) de support et de suspension est formé par au moins deux ensembles amortisseurs (31) comportant chacun une cale élastique (32) associée à un premier fil de suspente (33) relié à une face interne de ladite traverse arrière (2) et à un deuxième fil de suspente (34) relié audit silencieux (21).

5. Essieu selon l'une quelconque des revendications précédentes, **caractérisé en ce qu'**il existe un jeu entre des parois (15-19) de ladite traverse arrière (2) et ledit silencieux (21) autorisant un débattement dudit silencieux (21).

6. Essieu selon l'une quelconque des revendications précédentes,, **caractérisé en ce que** ladite traverse arrière (2) est équipée d'un écran (37) thermique ou thermo-acoustique.

7. Essieu selon l'une quelconque des revendications précédentes,, **caractérisé en ce que** ledit volume creux (20) de ladite traverse arrière (2) est fermé par une plaque (38) assurant une tenue mécanique.

8. Essieu selon la revendication précédente, **caractérisé en ce que** ladite plaque (38) comporte des zones de ventilations (40) constituées par une pluralité d'ouvertures traversantes.

9. Essieu selon l'une quelconque des revendications précédentes,, **caractérisé en ce que** ledit corps (3) de ladite traverse arrière (2) est pourvu de chicanes.

## Patentansprüche

1. Hinterachse (1) eines Kraftfahrzeugs, die einen hinteren Querträger (2) umfasst, der mit einem Körper (3) versehen ist, mit dem eine erste und eine zweite Halbachse (5) sowie ein Schalldämpfer (21) verbunden sind, der darauf abzielt, den Schallpegel von Abgasen, die in dem Abgasstrang (25) zirkulieren, einzuschränken, **dadurch gekennzeichnet, dass** der Schalldämpfer (21) im Inneren eines Hohlraums (20), der von dem Körper (3) des hinteren Querträgers (2) abgegrenzt ist, positioniert ist, dass der Körper (3) des hinteren Querträgers (2) durch Wände (15, 16, 17) abgegrenzt ist, und dass dieser Körper (3) einen im Wesentlichen U-förmigen Querschnitt aufweist.

2. Achse nach Anspruch 1, **dadurch gekennzeichnet, dass** der hintere Querträger (2) eine erste Öffnung (24) umfasst, die ein Durchgehen eines Eingangs des Abgasstrangs (25) gestattet, sowie eine zweite Öffnung (26), die das Durchgehen eines Ausgangs des Abgasstrangs (25) gestattet.

3. Achse nach einem der vorhergehenden Ansprüche, **dadurch gekennzeichnet, dass** der hintere Querträger (2) ein Trag- und Aufhängungssystem (30) des Schalldämpfers (21) umfasst.

4. Achse nach dem vorhergehenden Anspruch, **dadurch gekennzeichnet, dass** das Trag- und Aufhängungssystem (30) aus mindestens zwei Dämpferanordnungen (31) gebildet ist, die jeweils eine elastische Verkeilung (32) umfassen, die mit einem ersten Tragdraht (33) assoziiert ist, der mit einer Innenseite des hinteren Querträgers (2) verbunden ist, und mit einem zweiten Tragdraht (34), der mit dem Schalldämpfer (21) verbunden ist.

5. Achse nach einem der vorhergehenden Ansprüche, **dadurch gekennzeichnet, dass** ein Spiel zwischen Wänden (15-19) des hinteren Querträgers (2) und dem Schalldämpfer (21) existiert, das ein Ausschlagen des Schalldämpfers (21) gestattet.

6. Achse nach einem der vorhergehenden Ansprüche, **dadurch gekennzeichnet, dass** der hintere Querträger (2) mit einer thermischen oder thermo- akustischen Abschirmung (37) ausgestattet ist.

7. Achse nach einem der vorhergehenden Ansprüche, **dadurch gekennzeichnet, dass** der Hohlraum (20) des hinteren Querträgers (2) durch eine Platte (38), die ein mechanisches Halten sicherstellt, verschlossen ist.

8. Achse nach dem vorhergehenden Anspruch, **dadurch gekennzeichnet, dass** die Platte (38) Belüftungszonen (40) umfasst, die aus einer Vielzahl durchgehender Öffnungen bestehen.

9. Achse nach einem der vorhergehenden Ansprüche, **dadurch gekennzeichnet, dass** der Körper (3) des hinteren Querbalkens (2) mit Schikanen versehen ist.

## Claims

1. A rear axle (1) of a motor vehicle comprising a rear crossmember (2) provided with a body (3) to which are connected a first and a second half-axle (5) and also a silencer (21) aiming to limit a noise level of exhaust gas circulating in an exhaust line (25), **characterized in that** said silencer (21) is positioned in the interior of a hollow volume (20) delimited by said body (3) of said rear crossmember (2), **in that** the body (3) of said rear crossmember (2) is delimited by walls (15, 16, 17), and **in that** said body (3) has a substantially U-shaped cross section.

2. The axle according to claim 1, **characterized in that** said rear crossmember (2) comprises a first opening (24) permitting a passage of an entry of said exhaust line (25), and a second opening (26) permitting the passage of an exit of said exhaust line (25).

3. The axle according to any one of the preceding claims, **characterized in that** said rear crossmember (2) comprises a system (30) for support and suspension of said silencer (21).

4. The axle according to the preceding claim, **characterized in that** the support and suspension system (30) is formed by at least two damping assemblies (31), each comprising an elastic shim (32) associated with a first suspension wire (33) connected to an internal face of said rear crossmember (2), and with a second suspension wire (23) connected to said silencer (21).

5. The axle according to any one of the preceding claims, **characterized in that** a play exists between walls (15-19) of said rear crossmember (2) and said silencer (21) permitting a displacement of said silencer (21).

6. The axle according to any one of the preceding claims, **characterized in that** said rear crossmember (2) is equipped with a thermal or thermo-acoustic screen (37).

7. The axle according to any one of the preceding claims, **characterized in that** said hollow volume (20) of said rear crossmember (2) is closed by a plate (38) ensuring a mechanical rigidity.

8. The axle according to the preceding claim, **characterized in that** said plate (38) comprises zones of ventilations (40) constituted by a plurality of through-openings.

9. The axle according to any one of the preceding claims, **characterized in that** said body (3) of said rear crossmember (2) is provided with baffles.
